# EUROPEAN PATENT APPLICATION

(11) **EP 2 492 763 A1**
(43) Date of publication of application: **29.08.2012**
(21) Application number: 12157323.2
(22) Date of filing: 28.02.2012
(51) Int. Cl.: G05B 15/02

(54) **Energy management system of a building and relative method**

(30) Priority: 28.02.2011 IT MI20110291
(71) Applicant: Real T S.r.l., 37131 Verona (IT)
(72) Inventor: Tomazzoli, Claudio, 37122 Verona (IT)
(74) Representative: Ferrari, Barbara

(57) **Abstract**

Energy management system of at least one building (2) comprising an electric installation (3) for delivering said energy to connection points (4) for devices (5) consuming said energy, the system comprises: an energy flow manager (8) that controls and manages the changes of operation of said devices (5) by means of a wireless communication; a plurality of sensors and actuators (10), each one being associated with one of said connection points (4) and being equipped with circuitry able to detect the electrical consumption quantities of said energy by said devices (5) being connected and to send corresponding first wireless signals (Inl) to said energy flow manager (8) and to command said consumption quantities in said connection points (4); energy flow decisions (15) implemented by said energy flow manager (8) on the basis of said first wireless signals (Inl) as detected and of predefined stored management strategies (16), said energy flow manager (8) sending second wireless signals (ln2) to said plurality of sensors and actuators (10) based on said energy flow decisions (15) by controlling the actual consumption of said devices (5). In this way, the system does not require the intervention of specialised technicians and it could be also used with already existing implant.

## Description

### Field of application

The present invention relates to an energy management system of at least one building.

More specifically, the invention relates to an energy flow management system of at least one building comprising an electric installation provided with connection points for devices consuming said energy.

The invention also relates to a method for energy flow management.

In particular but not exclusively, the invention relates to an electric and/or thermal energy management system and the following description is made with reference to this field of application only for simplifying the description thereof.

### Background Art

As it is well known, several solutions aimed at improving the quality of life in household and working environments have been developed and proposed over the last few years.

Building automation and domotics envisage a computerised management of existing installations, such as for example air conditioning, water, gas and electric energy distribution installations for meeting comfort and safety as well as energy saving requirements.

As regards for example to the electrical installation, some systems provide for arranging suitable cables, connectors and infrastructures for making a wired electrical network connected to a command unit that allows the programmed time start and stop of some electrical devices to be controlled and monitored. Through the command unit, a suitable user can program the time start and/or stop of the connected electrical devices, such as computers, lamps, household appliances, electrical shutters, air conditioning installation and alike.

In this way, the devices connected to the electrical installation are started/stopped by the command unit at scheduled times. Each device is associated with tan expected electrical consumption and, on the basis of the active devices, the command unit estimates the electrical consumption of the building. In this way, the command unit does not allow the activation of a further device if the estimated electrical consumption of the building reaches a predetermined threshold.

Some systems envisage associating the command unit with a telephone network and informing the user about the status of the building or any anomalies by the transmission, for example, of a message on a mobile phone. The user can in turn set up the start or stop of an equipment from the exterior as desired.

While such systems are advantageous under several aspects, they exhibit some drawbacks, in particular they require an unconditional resorting to specialised personnel for system design, for installing the installation as well as for the subsequent technical support.

Such drawbacks drastically reduce the use and the development of said systems.

The need is also felt by some companies to keep electrical devices under command from both the point of view of consumptions, in a logic of electrical consumption management, and from the point of view of ownership, in a logic of registration of the devices being present at the company. Generally, personnel in charge such as the energy-manager, performs a constant analysis of the delivered electrical energy bills and creates a database that allows the registration of computers, printers, lamps and other similar devices being present at the company. However, such database requires a manual updating with the insertion of new equipment, the indication of any disposal or movement of a device from one room to the other of the company.

Moreover, some systems envisage the graphical or table representation of the expected consumptions of a building optionally through representations divided into daily, weekly, monthly consumptions and other. In the case of a considerable amount of data to be displayed, the processing is quite long and the high density of displayed data creates not very significant representations.

The technical problem at the basis of the present invention is to provide a system and a method having such structural and functional features as to allow automating the device energy consumption management based on detected consumptions, as well as quickly displaying the detected consumptions overcoming the limitations that still afflict the systems and methods made according to the prior art.

### Summary of the invention

The solution idea at the basis of the present invention is to detect quantities correlated to the energy flow actually consumed at each single connection point of the building and automatically command such consumptions.

Based on such solution idea, the technical problem is solved by an energy management system of at least one building comprising an electric installation for delivering said energy provided with connection points for devices consuming said energy, characterized in that it comprises:
- an energy flow manager that controls and manages the changes of operation of said devices by means of a wireless communication;
- a plurality of sensors and actuators, each one being associated with one of said connection points and being equipped with circuitry able to detect the consumption quantities of said energy by said devices being connected and to send corresponding first wireless signals to said energy flow manager and to command said consumption quantities in said connection points;
- energy flow decisions implemented by said energy flow manager on the basis of said first wireless signals as detected and of predefined stored management strategies, said energy flow manager sending second wireless signals to said plurality of sensors and actuators based on said energy flow decisions by controlling the actual consumption of said devices.

Suitably, the energy flow manager comprises a table of actions, each action being associated with a sensor and actuator and a corresponding command, said energy flow manager further comprising a table of events and a table of driving, said table of events being equipped with at least one event associated with said sensors and actuators and said table of driving comprising said at least one event associated with a corresponding action.

Advantageously, each one of said stored management strategies according to the present invention comprises at least one rule associated with at least one of said events, said rule comprising a schedule portion of said associated event and a strategic consumption portion of said associated event, said strategic consumption portion comprising a threshold value of consumption in conjunction with said event of said rule and at least one consequential event.

Such consequential event is one of said events of said table of events.

The first wireless signals are sent to said energy flow manager at first regular time intervals, said time intervals being within the range (1-60)s, preferably equal to 5s.

Suitably, the energy flow manager generates said second wireless signals based on said actions.

The system comprises a signal processing subsystem that comprises storage means suitable to store said first wireless signals as detected and visual means suitable to display said first wireless signals as detected if a required visual interval is less than or equal to a threshold and to display data correlated to said first wireless signals if the required visual interval is greater than said threshold.

Said storage means groups said first wireless signals into uniform groups of collected data in a second time interval, said storage means calculating for a corresponding average value and/or a corresponding maximum value each of said uniform groups of received data.

The second time interval is one day and the threshold is one month.

The first wireless signals as detected by said plurality of sensors and actuators correspond to real time current values.

Advantageously, said first wireless signals further detect real time values of a voltage and of a phase displacement angle.

The system further comprises a user unit that communicates through a public network or a private network with said energy flow manager by setting said predetermined management strategies and displaying a current status of the energy flow as processed by said energy flow manager.

The system also comprises a subsystem for forecasting said energy consumptions, in particular a subsystem comprising at least one neural network or a Bayes estimator.

The problem is also solved by a method for energy management of at least one building comprising an electric installation for delivering said energy to connection points for devices consuming said energy, characterized in that it comprises the following steps:
- providing an energy flow manager that controls and manages the changes of operation of said devices by means of a wireless communication;
- providing sensors and actuators in said connection points suitable to detect the consumption quantities of said energy of said devices being connected and to send corresponding first wireless signals to said energy flow manager and also suitable to command said consumption quantity in each of said connection point;
- detecting said first wireless signals and implementing energy flow decisions on the basis of said first wireless signals as detected and on predefined management strategies stored in said energy flow manager;
- sending second wireless signals to said sensors and actuators according to said energy flow decisions; said step of sending said second wireless signals being implemented by said energy flow manager in an automatic manner.

The method further comprises the step of setting said management strategies by defining a table of actions, each action being defined by associating a sensor and actuator to a corresponding command, said command defining a corresponding second wireless signal, said step of setting said management strategies further comprising the step of defining a table of events and a table of driving which associates at least one event to one action.

Such a step of setting said management strategies defines a true rule engine.

Advantageously, said step of setting said management strategies comprises the step of associating at least one rule with each one of said events, setting up for each rule a schedule portion of said associated event and a strategic consumption portion of said associated event, said strategic consumption portion defining a threshold value of consumption associated with said event and at least one consequential event.

Advantageously, the method provides for associating two or more of said events with a same rule.

Suitably, the method provides for associating a same action with a plurality of said events.

The step of sending said second wireless signals provides for sending warning signals to said user by using a public or private communication network.

The method advantageously comprises a step of displaying suitable to display the status of consumption of said energy in a required visual interval, said step of displaying providing to display said first wireless signals if said required visual interval is less than or equal to a threshold and to display said data correlated to said first wireless signals if said required visual interval is greater than said threshold. Suitably, the step of displaying provides for grouping said first wireless signal into uniform groups of received data in a second time interval and for calculating a corresponding average value and/or a corresponding maximum value for each of said uniform groups of received data.

The step of displaying further provides for setting predetermined display sub-intervals being selectable by said user for displaying the consumption status of said energy in said sub-intervals.

Advantageously, the method according to the present invention comprises a step of forecasting said energy consumptions, in particular by using at least one neural network or a Bayes estimator.

The features and the advantages of the system and method according to the present invention will appear more clearly from the following description of an embodiment thereof, made by way of an indicative and non-limiting example with reference to the annexed drawings.

### Brief description of the drawings

In such drawings:
- figure 1 shows a schematic view of the system according to the present invention;

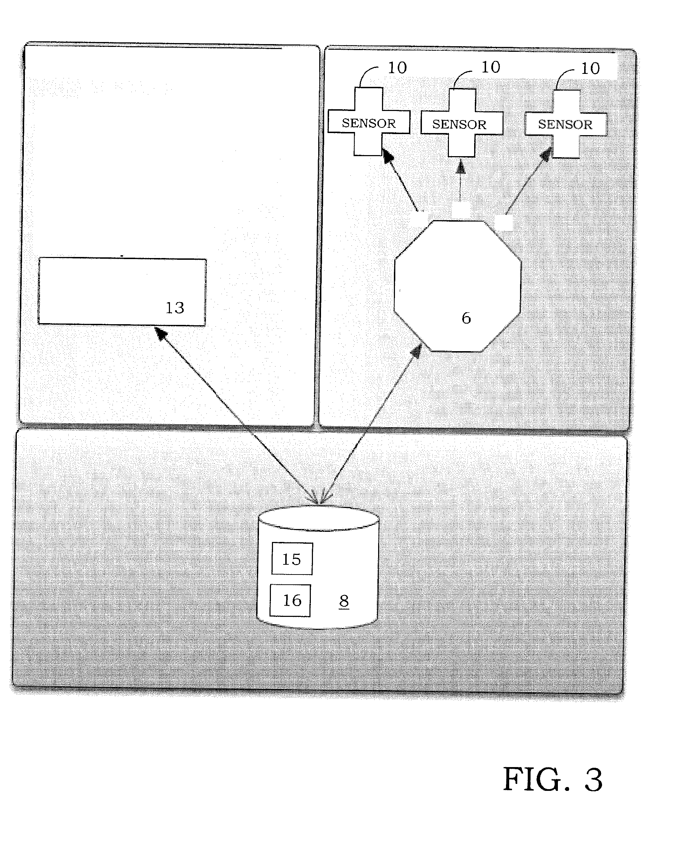

- figures 2 and 3 show diversified block diagrams of the system of figure 1;
- figures 4-7 show screens relating to implementations of the decisions of the energy flow of the system according to the present invention;
- figures 8-10 show video screens relating to selections of displaying of the consumptions as detected by the system of figure 1;
- figures 11-13 show video screens relating to different examples of graphical representations of the consumptions as detected by the system of figure 1;
- figure 14 shows a flow diagram of an example of sampling for representing the consumptions as detected.

### Detailed Description

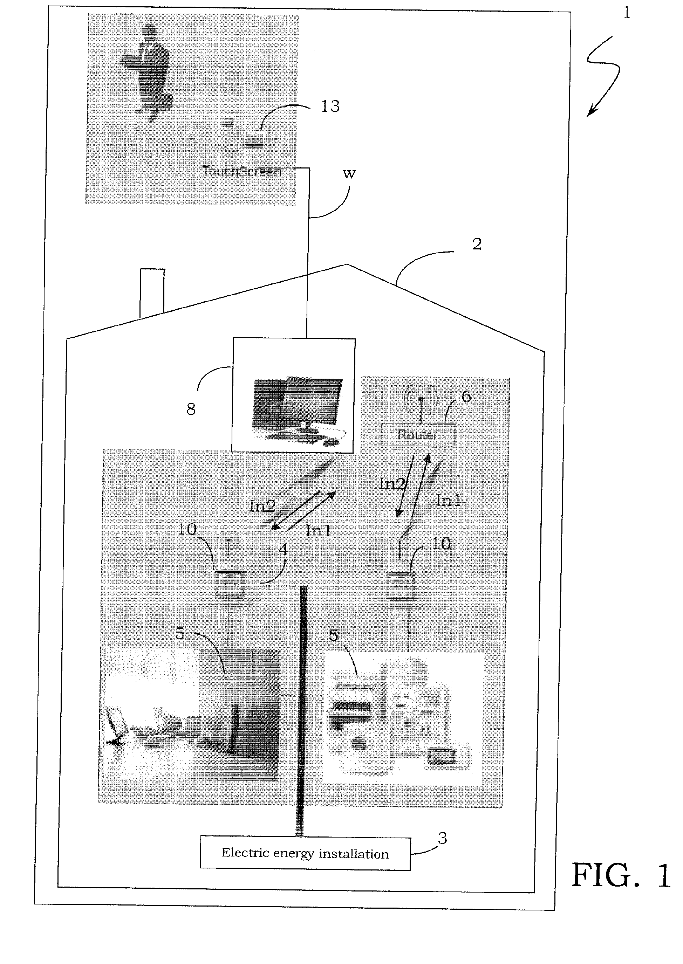

With reference to such figures, and in particular to figure 1, reference numeral 1 globally and schematically indicates an energy management system of a building 2.

In the present example, reference shall be made to an electrical energy management system by way of a non-limiting illustration only.

The building 2 comprises an electric installation 3, which in the present example is a 220V installation, provided with connection points 4 for electrical devices, hereinafter referred to as devices 5. Such devices 5 are computers, lamps, printers, photocopying machines, air conditioners and the like, if the building 2 is an office, or household appliances, computers and the like if the building 2 is a house.

The system 1 also comprises an energy flow manager 8 that controls and manages the changes of operation of said electrical devices 5 being connected to said connection points 4.

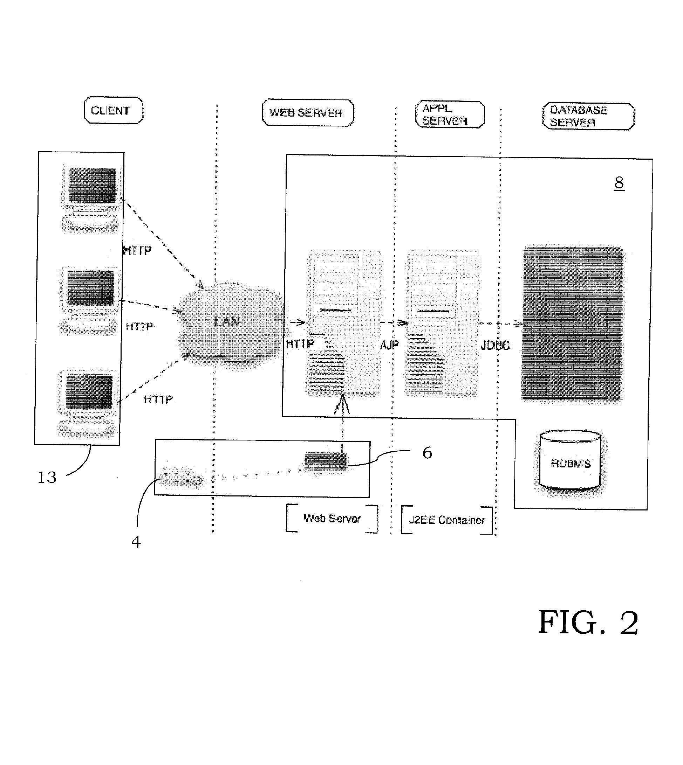

The energy flow manager 8, as schematically shown in figure 2, is substantially a server, that is, a device provided with suitable boards for connecting to a public or private network, for example a LAN network, so as to communicate with other computers and/or phone equipments, capable of receiving and sending wireless signals from and to said connection points 4 and provided with a database and a system such as for example a system known by the acronym DBMS or DataBase Management System.

In particular, the energy flow manager 8 has a TCP/IP Wired connectivity.

The system 1 further comprises a plurality of sensors and actuators 10, each one being associated with one of said connection points 4 and in particular arranged between the connection point 4 and a device 5. Each sensor and actuator 10 is equipped with suitable circuitry able to detect electrical consumption quantities and send corresponding first wireless signals In1 to the energy flow manager 8. In particular, the quantities as detected correspond to real time values of a current I.

In particular, each sensor and actuator 10 could be simply inserted in a connection point 4, which is still of the standard type and in particular could be already installed in the building, and it comprises connectors being adapted to connect a device 5. In the case of connection points 4 of the type of electric sockets, the sensor and actuator 10 could be in the form of a "fake" outlet, which could be a triple outlet able to multiply the connections of a current outlet such as a socket. It is suitable to underline that the wireless circuitry comprised into the sensor and actuator 10 allows a simple insertion connection, without the need of providing cables for its connection with such an already provided socket. In this way, advantageously according to the invention, the provision of the system 1 comprising the sensors and actuators 10 does not require to use specialised technicians and in particular the substitution of and already provided implant with purposely provided cables for the system 1. It is in fact suitable to note that the arrangement and connection of such sensors and actuators 10 could be made by a not expert user, in particular in case of an electric outlet being equivalent to the connection of a triple outlet in an already provided socket.

It could be also possible to realise the sensors and actuators 10 in such a way to be comprised into the connection points 4 where there is the need of substituting themselves, for instance in case of particular devices 5, such as an air conditioner which already require in normal condition the provision of a suitable socket, or in case of a global changing of the implant, or also in case of an implant to the realized ex novo for a new building.

Moreover, advantageously, the circuitry of the sensor and actuator 10 controls said electrical consumption quantity at the connection points 4, in particular it allows blocking or adjusting the energy flow subsequent to the reception of a suitable command.

A router or coordinator 6 is arranged between the energy flow manager 8 and the connection points 4 and is provided with a wireless communication protocol for the communication between the energy flow manager 8 and each single sensor and actuator 10 associate to these connection points 4. In particular, the router 6 uses the Zigbee® protocol which uses a radio wave communication. The router 6 has a dual connectivity TCP/IP Wired and wireless.

It is suitable to underline that the use of the Zigbee® protocol being specifically chosen between the possible wireless technologies realises a mashed network wherein each connection point 4 being associate with a sensor and actuator 10 actually is a point for receiving but also for transmitting the signal of the wireless network.

The energy flow manager 8 implements energy flow decisions 15 of the energy flow on the basis of said first wireless signals In1 as detected and of predefined stored management strategies 16. In this way, the system 1 automatically controls the operation of devices 5 according to a logic on consumptions as detected in real time.

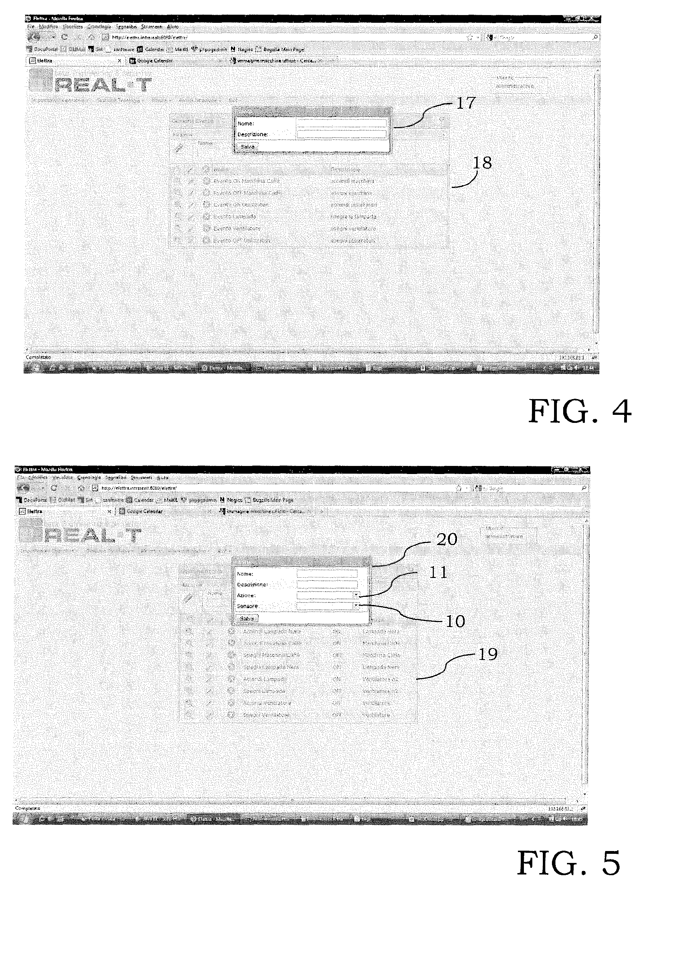

The energy flow manager 8 comprises a table of events 18 wherein each event 17 comprises a description of the same. A user defines each event 17 through a suitable window during a setting step of the system 1, as shown in figure 4.

Moreover, the energy flow manager 8 comprises a table of actions 19, wherein each action 20 is stored by the user during the setting step of the system 1, as shown in figure 5. Each action 20 associates a sensor and actuator 10 and a related command 11. Each sensor and actuator 10 has at least two associated actions 20: one action 20 relating to the ON activation command 11 and one action 20 relating to the OFF deactivation command 11. Moreover, each action 20 may comprise a description and optionally an identification name of the action 20 itself.

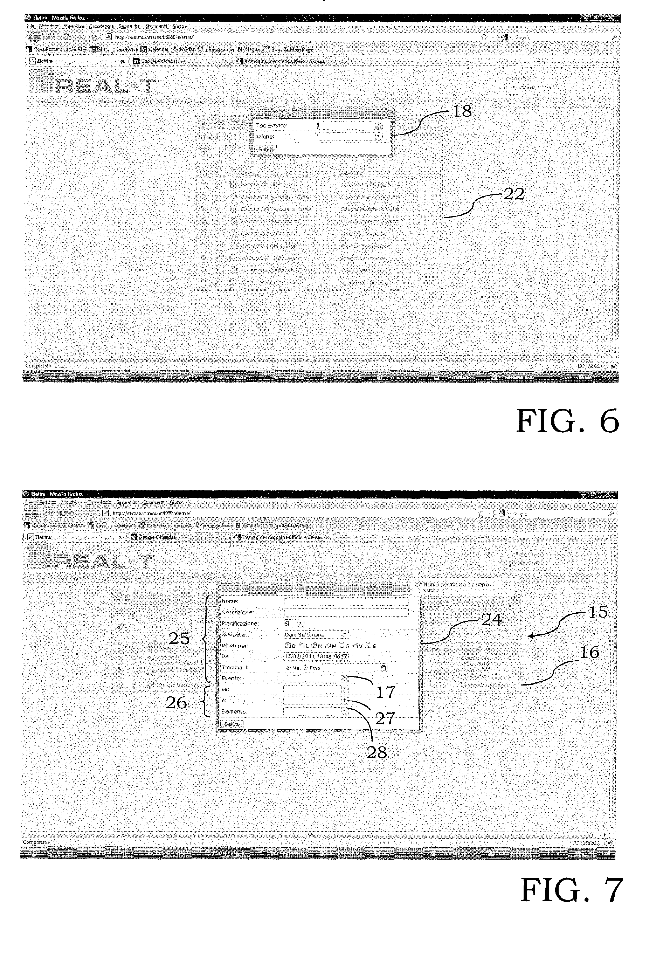

The energy flow manager 8 further comprises a table of driving 22 wherein each event 17 is associated with a corresponding action 20, as shown in figure 6. Based on the driving table 22 and on the table of events 19, the energy flow manager 8 generates a related command 11 sending a corresponding second wireless signal In2 to the sensor and actuator 10 being associated with the corresponding action 20.

Each stored management strategy 16 is provided with a table that comprises at least one rule 24 being associated with an event 17. Each rule 24 defines the modes according to which the user wants the event 17 to be repeated.

The rules 24 are predefined by the user based on a suitable window during the setting step of the system 1, as shown in figure 7. The rule 24 substantially comprises a schedule portion 25 and a strategic consumption portion 26.

In particular, the schedule portion 25 comprises a name, a description and a schedule of the rule 24, that is, on which days of the week the associated event 17 will be repeated, the start day and the optional end.

The strategic consumption portion 26 comprises at least one threshold value 27 and a consequential event 28. In particular, the consequential event 28 is one of the predefined events 17 with which the corresponding action 20 and thus the related command 11 are associated.

The consequential event 28 is executed if the actual consumption being associated with the event 17 of the rule 24 exceeds the preset threshold value 27.

Of course, the possible combinations between action 20, events 17 and commands 11 are multiple and generated by the user based on the single needs as defined by each rule 24. The actual consumption is calculated by the energy flow manager 8 based on the value of the first wireless signals In1 that are sent at first predefined regular time intervals Δt1 by all the sensors and actuators 10. The regular intervals of consumption detection and thus of the first wireless signals In1 may be any value within the range [1-60]s, preferably equal to 5s.

By way of an example, the strategic consumption portion 26 of a rule 24 comprises:

| | |
|---|---|
| threshold value 27: | "the computer is consuming more than 50W" |
| consequential event 28: | "switch off the scanner"; |
| or another example: | |
| threshold value 27: | "the consumption of the PC group is more than 500W" |
| consequential event 28: | "turn on the air conditioner". |

The combinations between events 17 and consequential events 28 are multiple and generated by the user based on single needs.

In a per se automatic manner, the energy flow manager 8 generates second wireless signals In2 based on the decisions 15 of the energy flow and sends such second wireless signals In2 to the plurality of sensors and actuators 10 for modifying the energy flow accordingly and in a predefined manner. The energy flow manager 8 may also send the second wireless signals In2 to the energy distribution system 3 if deemed to be required for modifying or temporarily interrupting the energy distribution.

In particular, the second wireless signals In2 are defined by commands 11 and are generated based on the actions 20 associated with said events 17 comprised in the schedule portion 25 of the active rules 24.

Moreover, the energy flow manager 8 generates further second wireless signals In2 based on the actions 20 associated with said consequential events 28 comprised in the strategic consumption portion 26 of each active rule 24, actually automatically modifying the operation of the device 5 and thus the energy consumption status.

In particular, the energy flow manager 8 acts on a single sensor and actuator 10 or on a group of sensors and actuators 10, according to whether a specific event 17 is associated with a single action 20 or multiple actions 20.

Due to the separation between rule 24, event 17 and action 20, the stored management strategies 16 allow the energy flow manager 8 to manage consumptions in a simple and functional manner. In particular, based on the rules 24 it is possible to associate a single event 17 with multiple actions 20 or associate multiple events 17 with a single action 20. Moreover, based on said consequential events 28, the energy flow manager 8 autonomously and automatically modifies the actual consumption status.

Such a maximum freedom of planning the management strategies as stored defines a true rule engine with actions-events-rules being separated and independent and settable by each single user.

Moreover, the system 1 according to the present invention comprises a signal processing subsystem adapted to display the first wireless signals In1 as detected and thus the actual consumptions.

The signal processing subsystem comprises storage means adapted to store the first wireless signals In1 as detected at said first time intervals Δt1, grouping them into uniform groups of data according to a second time interval Δt2. According to one example, the second time interval Δt2 is one day.

The signal processing subsystem further comprises visual means adapted to display, in a display suitably associated with said energy flow manager 8, the first wireless signals In1 as detected in a required visual interval 30.

In particular, the visual means display the first wireless signals In1 comprised in said storage means, that is, the electrical quantities actually detected, if the required visual interval 30 is less than or equal to a predetermined threshold Δt3 and display data correlated to said first wireless signals In1 if the required visual interval 30 is more than said threshold Δt3.

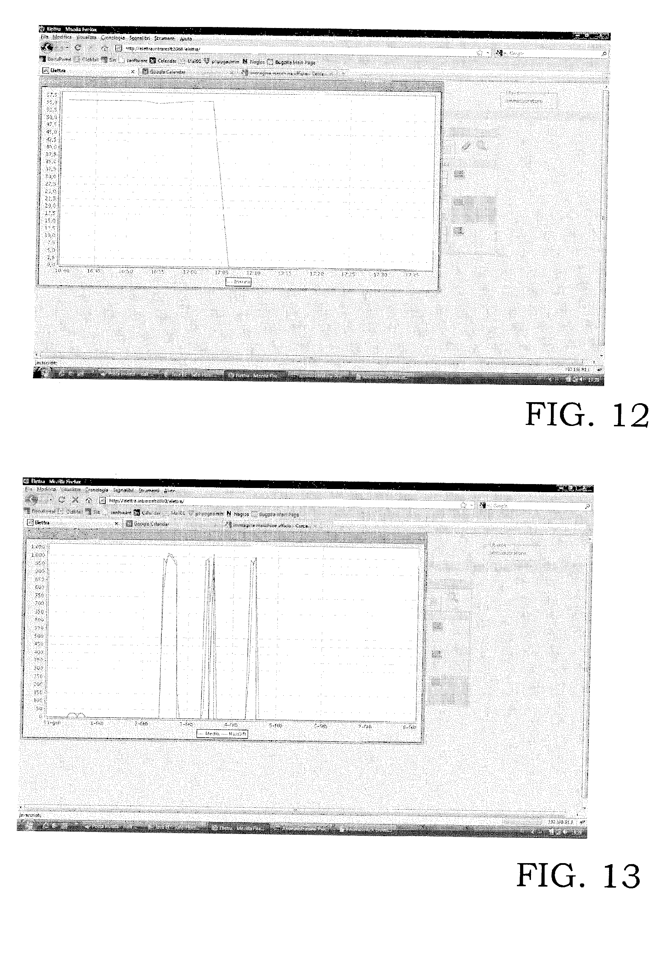

Even more in particular, for each uniform group of collected data, for example for the first wireless signals In1 as detected on a same day, the storage means calculate a corresponding average value and a corresponding maximum value. Such corresponding average values and maximum values are suitably stored into third storage means. Then, if the required visual interval 30 is higher than said threshold Δt3, the visual means display, for each day comprised within the visual interval 30, the corresponding average value, as shown for example in figure 12. Moreover, the visual means further display the corresponding maximum value for each day, making the display quick and clear, as shown in figure 13. The threshold Δt3 is predefined by the user and in one example it is a multiple of the second time interval Δt2. If the first time interval Δt1 is 5 s and the second time interval Δt2 is one day, the threshold Δt3 may be one month. Of course, such time interval values depend on the value of the first time interval Δt1 and on the number of the sensors and actuators 10.

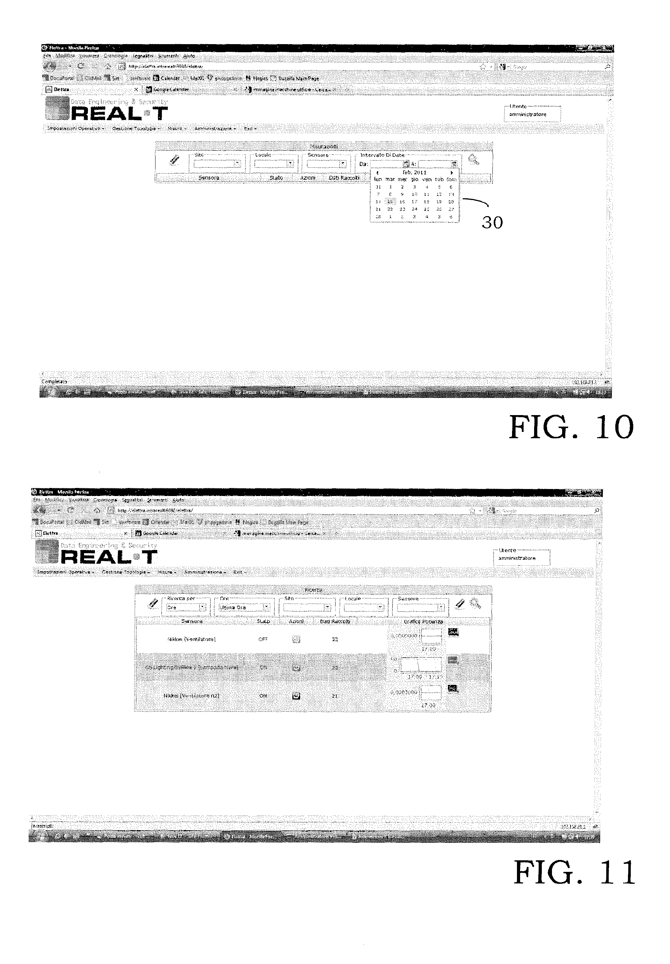

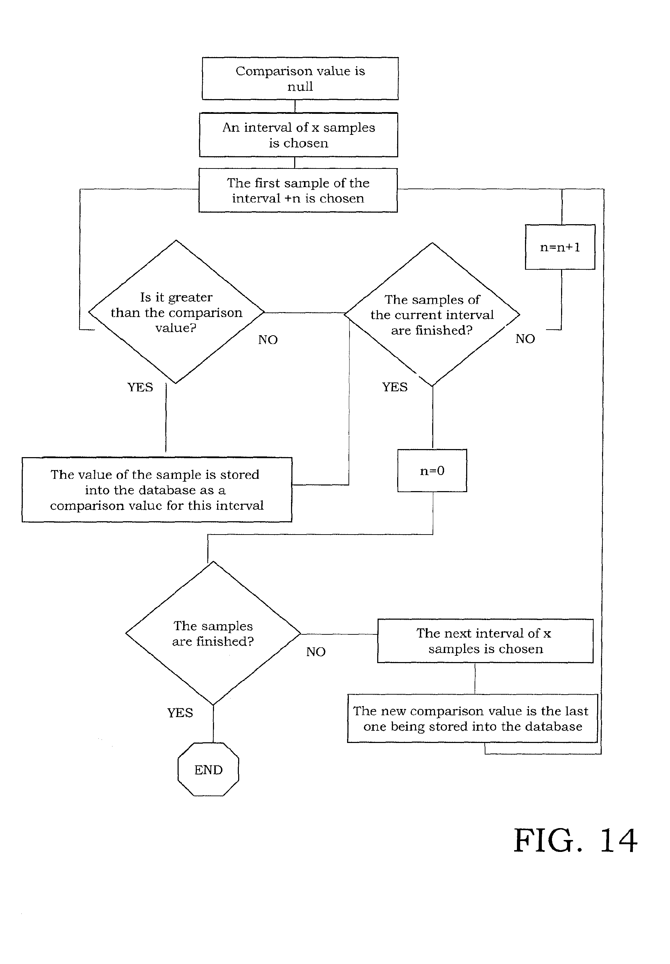

If the visual interval 30 is comprised between two dates, indicated in a suitable window to the user, as shown in figure 10, the signal processing subsystem displays the maximum values comprised in said third storage means and the representation uses an algorithm, such as for example that shown in figure 14 with a continuous line.

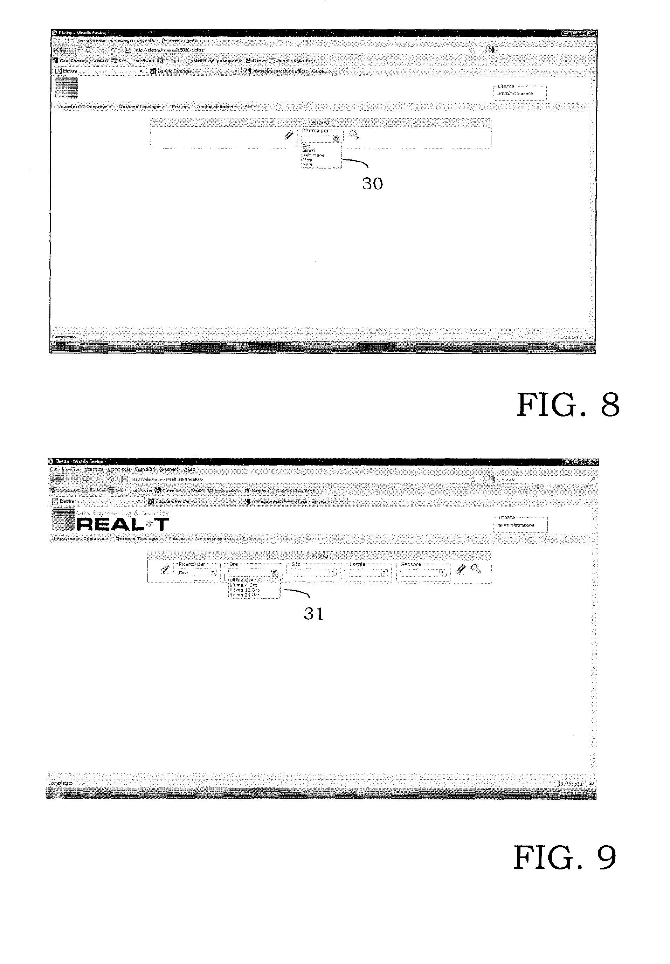

Moreover, the signal processing subsystem for a visual interval 30 below the threshold Δt3 may comprise predefined sub-intervals 31 wherein the user, through a window selection, can examine the corresponding energy flow consumptions, as schematically shown in figures 8 and 9. The predefined sub-intervals 31 allow the reduction of the displayed values, thus reducing the waiting times for displaying. For example, in the selection of the hours it is possible to select 1, 4, 12 or 20 hours before the request hour. For the days it is possible to select 1, 3, 6 days before the current date whereas for the weeks it is possible to select 1, 2 or 3 weeks before the current week. As described above, if months or years are displayed, the average values and the maximum values contained in said third storage means are displayed. It is suitable to note that the selection o these sub-intervals 31 allows a maximization of the efficiency of the system 1 as a whole

The system 1 further comprises a user unit 13 that communicates through a public network or a private network with the energy flow manager 8 allowing the user to remotely set the predetermined stored management strategies 16 as well as displaying a status of the energy flow processed by the energy flow manager 8 based on said signal processing subsystem.

Suitably, the system 1 according to the present invention comprises a forecasting subsystem for calculating future energy flow consumptions. In particular, the forecasting subsystem comprises at least one neural network or a Bayes estimator.

It should be noted that the forecasting subsystem could be also used for a backcasting process. In particular, while forecasting is the process of predicting the future based on a current trend analysis, the backcasting process approaches the challenge of discussing the future from the opposite direction, starting by defining a desirable future and then working backwards to identify strategies and programs that will connect the desired future to the present. The fundamental question of backcasting is in fact: "if we want to attain a certain goal, what actions must be taken to get there?". Backcasting is thus a planning method wherein a positive result is foreseen and then the steps to obtain such a positive result are established. It is remarked that such a method could be more efficient that a simple rely on the forecasting, since it is less limited with respect to the options being usable and it does not keep the today problems in the future.

As regards the operation, the user arranges the sensors and actuators 10 at the connection points 4 of the electrical system 3 and connects the router 6 to the energy flow manager 8. Through the user unit 13 or directly from the energy flow manager 8, the user sets the table of events 18 and the table of actions 19, as well as the driving table 22 for generating the second wireless signals In2. The user further sets the rules 24 associated with each event 17, which rules define the stored management strategies 16. For each rule 24, the user sets the schedule portion 25 and the strategic consumption portion 26 and thus the consequential event 28.

In a substantially autonomous and automatic manner, the energy flow manager 8 defines the energy flow decisions 15 generating the second wireless signals In2 based on the actions 20 associated with said events 17 and to consequential events 28 comprised in the rules 24.

Through the router 6, the second wireless signals In2 are sent to said sensors and actuators 10 so modifying the operation of said devices 5, or generating text or email notifications to the previously identified user.

Any external events 17, such as for example the switch on of a computer, a lamp or a household appliance, are all programmable. Such external events 17 are detected by the energy flow manager 8 through the first wireless signals In1 and a preset action 20 contained in a predetermined rule 24 defines at least one command 11 and a corresponding second wireless signal In2 is sent by the energy flow manager 8.

In particular, thanks to the present invention, after the initial setting made by the user, the system 1 operates autonomously and automatically.

The invention has several alternative embodiments, all falling within the same inventive concept. In the following description, reference shall be made to the system described above and cooperating parts and details having the same structure and function shall be indicated with the same reference numerals and initials.

In particular, the system 1 may be used in a 380V three-phase electrical installation and in that case, the electrical quantities detected by each sensor and actuator 10 comprise, besides the current value I, the voltage value V as well as the phase displacement angle value ϕ. Moreover, in a preferred embodiment, the energy flow manager 8 is a server with a three level or 3-tier architecture.

Moreover, the system 1 may set up a multiple level user management creating different user profiles, each one having the possibility of accessing predetermined functions. In particular, there may be an "Administrator" user which in full autonomy defines the stored management strategies 16, setting up events 17, actions 20 and driving table 22, a "User" user which can only access a consumption status display function, as well as various "Intermediate" user which may be enabled to edit the stored management strategies 16 and/or the events 17 and/or the actions 20 and/or the driving table 22 or others, according to permission logics.

The present invention also refers to a method for energy flow management in a system described above for which cooperating parts and details having the same structure and function shall be indicated with the same reference numerals and initials. The following description refers in particular to a method for electrical energy management in a building, without limiting the scope of protection of the present invention, a man skilled in the art being able to apply the present method to any energy distribution system, such as for example a thermal energy distribution system.

The method essentially comprises the steps of:
- providing the sensors and actuators 10 at the connection points 4 suitably interposing them between the connection points 4 and the devices 5;
- providing the energy flow manager 8 and connecting the energy flow manager 8 to the router 6 for the wireless communication with the sensor and actuator 10.

The method further comprises the steps of:
- setting and storing the management strategies 16 of the energy flow manager 8;
- detecting the first wireless signals In1 and implementing energy flow decisions 15 on the basis of said first wireless signals In1 as detected and on said predefined stored management strategies 16.

Finally, the method includes the step of sending second wireless signals In2 to said sensors and actuators 10 according to said energy flow decisions 15; said step being implemented by the energy flow manager 8 in an automatic manner.

The method comprises the step of setting the management strategies 16 which comprises the step of defining a table of actions 19, each action 20 being defined by associating a sensor and actuator 10 to a corresponding command 11. In particular, the command 11 generates the transmission of the second wireless signal In2 to said sensor and actuator 10 and/or the transmission of warning signals to the previously identified user using a public or private communication network. The warning signals may be text messages to mobile phones or landline telephones or email or others.

The step of setting the management strategies 16 further comprises the step of defining a table of events 18 and a driving table 22 which associates at least one event 17 with one of said actions 20. Moreover, the step of setting said management strategies 16 comprises the step of associating each one of said events 17 with at least one rule 24, setting for each rule 24 a schedule portion 25 of said associated event 17 and a strategic consumption portion 26 of said associated event 17. In particular, the strategic consumption portion 26 defines a threshold consumption value 27 associated with said event 17 and at least one consequential event 28.

Of course, the combination of the associations of events 17, rules 24, actions 20 and commands 11 may be multiple and programmable by the user based on specific needs, in particular the method may provide for the association of two or more of said events 17 with a same rule 24, or the association of a same action 20 with a plurality of said events 17. The method further comprises the display step adapted to display the electrical consumption status in the required visual interval 30. The display step provides for displaying:
- the first wireless signals In1 if the required visual interval 30 is less than or equal to the predetermined threshold Δt3;
- the average value and the maximum value for each of said second time intervals Δt2 comprised in the required visual interval 30 if such interval is more than a predetermined threshold Δt3.

Advantageously, the step of displaying provides for setting predetermined display sub-intervals 31 which may be selected by the user for displaying the consumption status of said energy in said sub-intervals 31.

Suitably, the method according to the present invention comprises a step of energy forecasting, in particular using at least one neural network or a Bayes estimator.

The main advantage of the system and method according to the present invention is an autonomous management of the energy flow with strategies and commands that are automatically defined according to a real detection of the actual consumption. In fact, the energy flow manager drives the sensors and actuators according to the real consumptions as detected and based on the preset energy flow decisions, whereas the sensors and actuators accordingly command the operation of the devices controlling the energy flow.

Another considerable advantage of the system and method according to the present invention is the usage versatility, since it may be used in any existing and standard electrical installation. In fact, the sensors and actuators may be associated with any connection point of any electrical installation.

Another considerable advantage of the system and method is the simplicity of installation as it does not require the intervention of any specialised technician in the building, neither for the design, the installation or the support, which may be optionally provided remotely.

Another advantage is the possibility of a remote and capillary management of the energy flow in any building in real time.

Another advantage is the reduction of the waiting time for displaying the energy flows according to the present invention which, using any correlated data, is quick and easy for any required time interval.

Another advantage is given by the maximum freedom of planning the stored management strategies which, thanks to the separation between rule, event, action and command may be defined and programmed by the user based on his/her needs.

Another advantage is the possibility of generating real time consumption reports, both grouped by room and grouped by homogeneous groups of devices, as well as the related possibility of quickly registering the devices associated with the connection points.

Another advantage is a considerable energy saving due to the possibility of defining, according to predetermined rules, the scheduled start and stop of electrical devices, preventing any energy wastes in all the buildings: offices, houses and others.

It is clear that a man skilled in the art may make several changes and variations to the device and method described above in order to meet specific and incidental needs, all falling within the scope of protection of the invention as defined by the following claims.

## Claims

1. Energy management system of at least one building (2) comprising an electric installation (3) for delivering said energy to connection points (4) for consumption devices (5) of said energy, **characterized in that** it comprises:
- an energy flow manager (8) that controls and manages the changes of operation of said devices (5) by means of a wireless communication;
- a plurality of connection sensors and actuators (10), each one being associated with one of said connection points (4) and being equipped with circuitry able to detect the consumption quantities of said energy by said devices (5) connected and to send corresponding first wireless signals (Inl) to said energy flow manager (8) and to command said consumption quantity in said connection points (4);
- energy flow decisions (15) implemented by said energy flow manager (8) on the basis of said first wireless signals (Inl) as detected and of predefined stored management strategies (16), said energy flow manager (8) sending second wireless signals (ln2) to said plurality of sensors and actuators (10) based on said energy flow decisions (15) by controlling the actual consumption of said devices (5).

2. System according to claim 1, **characterised in that** said energy flow manager (8) comprises a table of actions (19), each action (20) being associated with a sensor and actuator (10) and a corresponding command (11), said energy flow manager (8) further comprising a table of events (18) and a table of driving (22), said table of events (18) being equipped with at least one event (17) that could be associated with said sensors and actuators (10) and said table of driving (22) comprising at least one event (17) associated with a corresponding action (20).

3. System according to claim 2, **characterised in that** each one of said stored management strategies (16) comprises at least one rule (24) associated with at least to one of said events (17), said rule (24) comprising a schedule portion (25) of said associated event (17) and a strategic consumption portion (26) of said associated event (17), said strategic consumption portion (26) comprising a threshold value (27) of consumption in conjunction with said event (17) of said rule (24) and at least one consequential event (28).

4. System according to one or more of claims 1 to 3, **characterised in that** said energy flow manager (8) generates said second wireless signal (IN2) based on said actions (20).

5. System according to claim 1, **characterised in that** it comprises a signal processing subsystem that comprises storage means suitable to store said first wireless signals (Inl) as detected and display means suitable to display said first wireless signals (Inl) as detected if a required visual interval (30) is less than or equal to a threshold (At3) and to display data correlated to said first wireless signals (Inl) if said required visual interval (30) is greater than said threshold (At3).

6. System according to claim 5, **characterised in that** said storage means groups said first wireless signals (Inl) into uniform groups of detected data in a second time interval (At2), said storage means calculating for each of said uniform groups of detected data a corresponding average value and/or a corresponding maximum value.

7. System according to one or more of the preceding claims, **characterised in that** it further comprises a user unit (13) that communicates through a public network or a private network with said energy flow manager (8) setting said predetermined stored management strategies (16) and displaying an actual status of the energy flow processed by the energy flow manager (8).

8. System according to one or more of the preceding claims, **characterised in that** it further comprises a subsystem for forecasting said energy consumptions.

9. System according to claim 8, **characterised in that** said forecasting subsystem comprises at least one neural network or a Bayes estimator.

10. Method for energy management of at least one building (2) comprising an electric installation (3) for delivering said energy to connection points (4) for devices (5) consuming said energy, **characterized in that** it comprises the following steps:
- providing an energy flow manager (8) that controls and manages the changes of operation of said devices (5) by means of a wireless communication;
- providing sensors and actuators (10) in said connection points (4) suitable to detect the consumption quantities of said energy of said device (5) being connected and to send corresponding first wireless signals (Inl) to said energy flow manager (8) and suitable to command said consumption quantity in each of said connection point (4);
- detecting said first wireless signals (Inl) and implementing energy flow decisions (15) on the basis of said first wireless signals (Inl) as detected and on predefined management strategies (16) stored in said energy flow manager (8);
- sending second wireless signals (In2) to said sensors and actuators (10) according to said energy flow decisions (15); said step of sending said second wireless signals (In2) being implemented by said energy flow manager (8) in an automatic manner.

11. Method according to claim 10, **characterised in that** it comprises the step of setting said management strategies (16) by defining a table of actions (19), each action (20) being defined by associating a sensor and actuator (10) to a corresponding command (11), said command (11) defining a corresponding second wireless signal (In2), said step of setting said management strategies (16) further comprising the step of defining a table of events (18) and a table of driving (22), said table of driving (22) associating at least one event (17) to one of said actions (20).

12. Method according to claim 10 **characterised in that** said step of setting said management strategies (16) comprises the step of associating each one of said events (17) to at least a rule (24) by providing for each rule (24) a schedule portion (25) of said associated event (17) and a strategic consumption portion (26) of said associated event (17), said strategic consumption portion (26) defining a threshold value (27) of consumption in conjunction with said event (17) and at least a consequential event (28).

13. Method according to one or more of claims 10 to 12, **characterised in that** it comprises a step of displaying suitable to display the status of energy consumption in a required visual interval (30), said step of displaying providing to display said first wireless signals (Inl) if said required visual interval (30) is less than or equal to a threshold (At3) and to display said data correlated to said first wireless signals (Inl) if said required visual interval (30) is greater than said threshold (At3).

14. Method according to claim 13 **characterised in that** said step of displaying provides for grouping said first wireless signals (Inl) into uniform groups of received data in a second time interval (At2) and for calculating a corresponding average value and/or a corresponding maximum value for each of said uniform groups of received data.

15. Method according to one or more of claims 10 to 14, **characterised in that** it further comprises a step of forecasting said energy consumptions.
